# EUROPEAN PATENT SPECIFICATION

(11) **EP 0 392 679 B1**
(45) Date of publication and mention of the grant of the patent: **07.06.1995**
(21) Application number: 90303006.2
(22) Date of filing: 20.03.1990
(51) Int. Cl.: G02B 6/40

(54) **Branch device for multi-core optical fiber**
Verzweigungsvorrichtung für mehradrige optische Fasern
Dispositif de bifurcation pour fibres optiques multifilaires

(30) Priority: 14.04.1989 JP 95943/89; 22.08.1989 JP 217039/89
(43) Date of publication of application: 17.10.1990
(73) Proprietor: SUMITOMO ELECTRIC INDUSTRIES, LTD., Osaka-shi, Osaka 541 (JP)
(72) Inventor: Ohkura, Toshihiko, c/o Yokohama Works of Sumitomo, Yokohama-shi, Kanagawa (JP)
(74) Representative: Waite, Anthony William

(56) References cited:
- DE-A- 3 531 693
- FR-A- 2 534 700
- GB-A- 2 154 760
- US-A- 4 737 010
- US-A- 4 773 726

## Description

The present invention relates to an optical fibre cable branch device having a multi-fibre optical cable which may be in the form, for example, of a tape, cord or cable constituted a by plurality of single optical fibres collected together and branching therefrom.

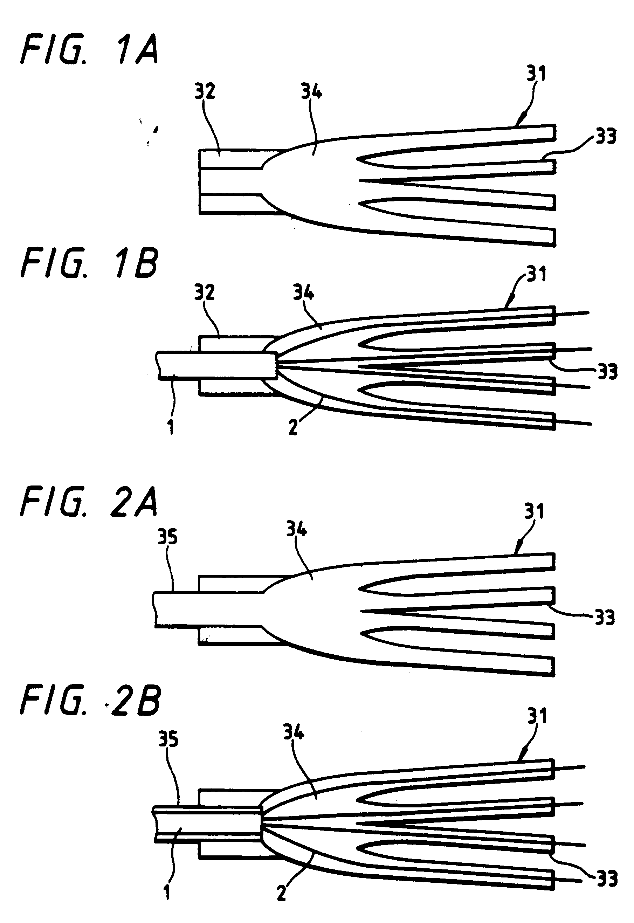

Figs. 1A and 1B illustrate an example of the branch portion of a conventional multi-fibre optical tape. Fig. 1A illustrates a configuration of a multi-branch tube used to form the branch portion and Fig. 1B illustrates the configuration of the branch portion.

A multi-branch tube 31 is constituted by an optical fibre fixing portion 32 which receives and fixes a multi-fibre optical tape 1, a plurality of single optical fibre protection tubes 33 which are disposed on the side opposite to the optical fibre fixing portion 32 so that branched single optical fibres 2 are passed therethrough respectively, and a branch portion accommodation space 34 which is formed between the optical fibre fixing portion 32 and the single optical fibre protection tubes 33, those portions 32, 33 and 34 being formed integrally with each other.

As shown in Fig. 1B, the multi-fibre optical tape 1 is fixed in the vicinity of an end portion thereof in the optical fibre fixing portion 32 of the multi-branch tube 31, and the single optical fibres 2 branched from the optical multi-fibre tape 1 are inserted through and protected by the single optical fibre protection tubes 33 of the multi-branch tube 31. Thus, the branch portion is formed.

Figs. 2A and 2B illustrate another example of the branch portion of a conventional multi-fibre optical tape. Fig. 2A illustrates the configuration of a multi-branch tube used to form the branch portion and Fig. 2B illustrates the configuration of the branch portion.

This example is different from the example of Fig. 1A in that a multi-branch tube 31 has no portion for fixing a multi-fibre optical tape 1 and a protection tube 35 for protecting the multi-fibre optical tape 1 is integrally formed. Accordingly, the tape 1 inserted into the protection tube 35 is not fixed thereto.

The foregoing conventional branch portion of the multi-fibre optical tape 1 attempts to provide a simple solution to the problem of how to make the multi-fibre optical tape 1 branch into a plurality of the single optical fibres 2, and the branch portion is designed in consideration of the arrangement of the single optical fibre protection tubes 33 so that no force is exerted on the single optical fibres 2 in the respective single optical fibre protection tubes 33. The branch portion is however ineffective in protecting the branching out single optical fibres 2 in the branch portion accommodation space 34 between the end portion of the optical fibre tape 1 and the single optical fibre protection tubes 33.

There is therefore a problem in that when resin or the like is poured into the branch portion accommodation space 34 so as to fix the single optical fibres 2, force is exerted on the single optical fibres 2 and may cause an increased optical loss. Further, if no resin is poured into the space 34, the increase of optical loss is similarly caused because of the lack of stability of the optical fibres 2 in the branch portion accommodation space 34.

FR-A-2534700 also discloses an optical fibre cable branch device which additionally includes a branch portion protector arranged between an end portion of a multi-fibre optical cable and single optical fibre protection tubes, the branch portion protector including a perforated member having a plurality of insertion holes formed at the same circumference. A substantially spindle-shaped protector extends coaxially from the perforated member and the branching single optical fibres are passed along an outer surface of the protector and passed through the insertion holes of the perforated member and thence through the single fibre protection tubes. This arrangement provides only a partial solution to the fibre stability problem referred to.

In accordance with the present invention, there is provided an optical fibre cable branch device comprising a multi-fibre optical cable, a plurality of single optical fibres branching out from said multi-fibre optical cable, a plurality of single optical fibre protection tubes, and a branch portion protector arranged between an end portion of said multi-fibre optical cable and said single optical fibre protection tubes, said branch portion protector including a perforated member having a plurality of insertion holes formed at the same circumference, and a substantially spindle-shaped protector formed integrally with said perforated member and disposed coaxially with said perforated member, said single optical fibres branching out from said multi-fibre optical cable passing over said spindle-shaped protector along an outer surface thereof and through said insertion holes of the perforated member and thence through the single optical fibre protection tubes respectively, a branch portion protection tube being disposed around the end portion of the multi-fibre optical cable and the branch portion protector, characterised in that the section of the branch portion protection tube around the end portion of the multi-fibre optical cable and the spindle-shaped protector is filled with resin, and in that the branch portion protection tube is fitted around the spindle-shaped protector in such a manner as to prevent the resin extending into the respective end portions of the single optical fibre protection tubes adjacent to the branch portion protector.

With the arrangement of the invention, no excessive bending force or the like is exerted on the branching-out single optical fibres. Further, the branching-out single optical fibres and the spindle-shaped protector are fixed to each other with resin or the like, so that it is possible to obtain a branch portion which is more stable with reduced optical loss. Increased stability and reduction in optical loss may be achieved if a plurality of longitudinal grooves are formed in the outer surface of the spindle-shaped protector so as to accommodate the branching-out single optical fibres therein.

With reference to the accompanying drawings:-
Figs. 1A, 1B, 2A and 2B are views for explaining the conventional branch devices;
Fig. 3 is a longitudinal sectional view showing a specific example of the optical fibre cable branch device of the present invention;
Figs. 4A and 4B are for explaining a branch portion protector in the device of Fig. 3; and
Figs. 5 and 6 are longitudinal sectional views showing other specific examples of the optical fibre cable branch device of the present invention.

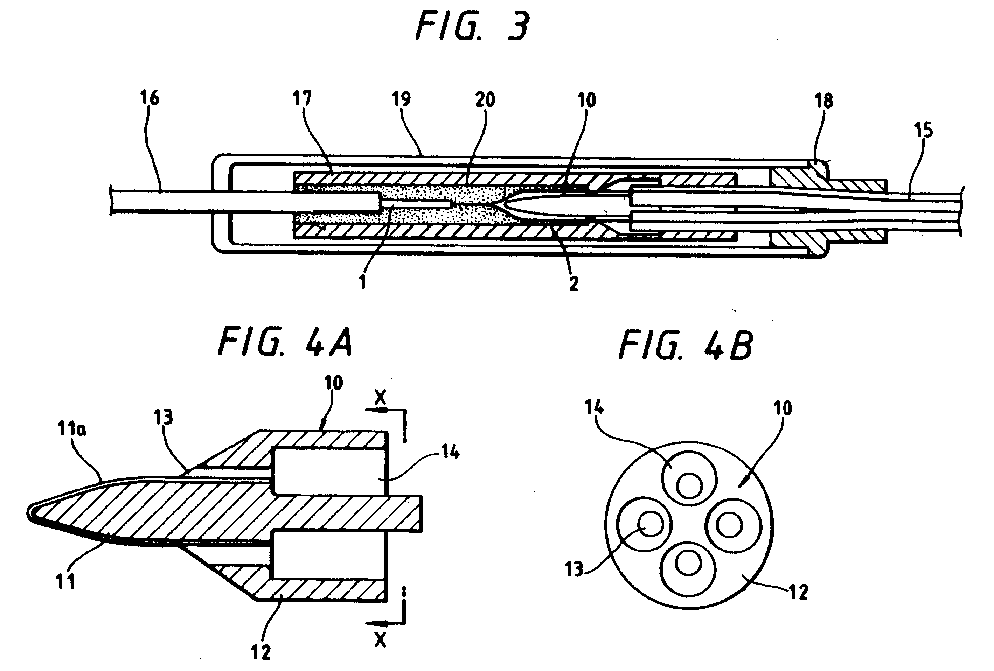

Fig. 3 is a longitudinal sectional view showing an embodiment of the optical fibre cable branch device of the present invention. Figs 4A and 4B show the configuration of the branch portion protector constituted by a spindle-shaped protector and a perforated member formed integrally with the spindle-shaped protector according to the present invention. Specifically, Fig. 4A is a longitudinal sectional view and Fig. 4B is a side view in the direction of the arrows X - X of Fig. 4A.

As shown in figures 3 and 4, in the branch device of the present invention, a branch portion protector 10 is arranged between an end portion of a multi-fibre optical cable 1 such as a multi-fibre optical tape, a multi-fibre optical cord, or the like, and single optical fibre protection tubes 15 for protecting single optical fibres 2 which branch out from the optical cable 1 and are inserted through the protection tubes 15.

The branch portion protector 10 is constituted by a substantially spindle-shaped protector 11 and a perforated member 12 integrally formed with each other, as shown in Figs. 4A and 4B. The perforated member 12 has pairs of two kinds of large and small insertion holes 13 and 14 formed on the same circumference, each pair having the small insertion hole 13 and the large insertion hole 14 which communicate with each other axially. The substantially spindle-shaped protector 11 is disposed coaxially with the perforated member 12 and has a plurality of grooves 11a formed in the outer surface thereof, if necessary, so as to accommodate therein the branching-out single optical fibres 2. In the perforated member 12, the small insertion holes 13 are provided to insert the single optical fibres 2 therethrough and the large insertion holes 14 are provided to insert the respective ends of the single optical fibre protection tubes 15 therein, where they are fixed.

The plurality of single optical fibres 2 branching out from the multi-fibre optical cable 1 are respectively led into the small insertion holes 13 of the perforated member 12 along the outer surface of the spindle-shaped protector 11 of the branch portion protector 10 or along the grooves 11a of the outer surface of the spindle-shaped protector 11, and respectively inserted through the single optical fibre protection tubes 15 fixed in the respective large insertion holes 14.

A protection tube 17 is provided so as to envelop the vicinity of the end portion of the multi-fibre optical cable 1 and the spindle-shaped protector 11 of the branch portion protector 10. The inside of the protection tube 17 is filled with resin 20 so that the single optical fibres 2 and the spindle-shaped protector 11 are fixed. The resin used may be formal resin, UV-setting resin, one-component or two-component resin, or the like. In this case, a heat-shrinkable tube may be used as the protection tube such that the inside thereof is filled with heat-fusible adhesive. Further, an external protection tube 19 is provided outside the protection tube 17. The multi-fibre optical cable 1 is inserted through a protection tube 16 for protection thereof, and one end of the external protection tube 19 is located over a portion of the protection tube 16 and fixed thereat. A rubber boot 18 is attached onto the other end of the external protection tube 19 so as to protect the single optical fibre protection tubes 15.

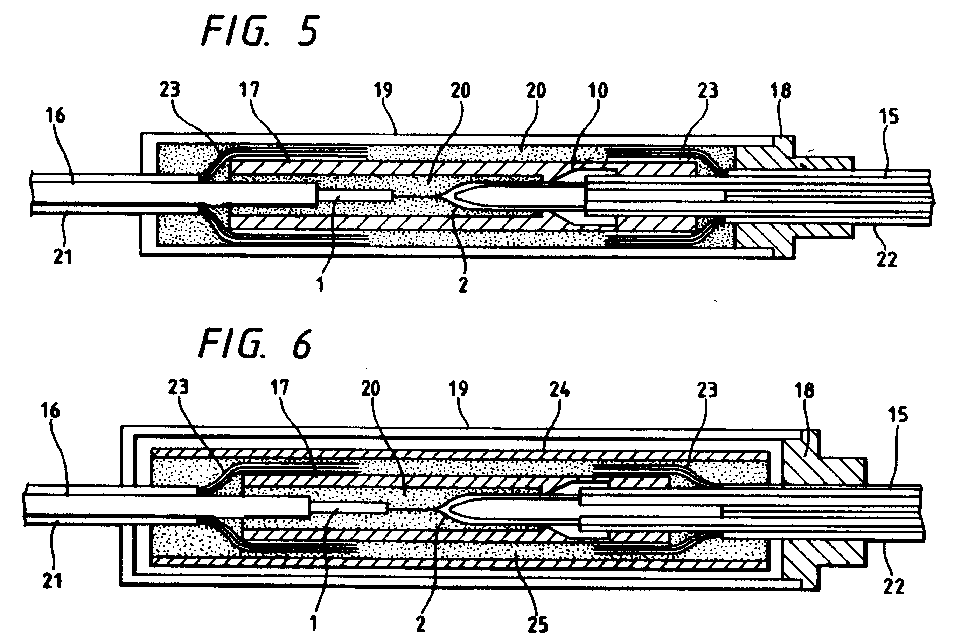

Fig. 5 is a longitudinal sectional view showing another embodiment of the optical fibre cable branch device of the present invention.

This embodiment shows the case where fibrous anti-tensile bodies 23 and external coatings 21 and 22 are provided over the single optical fibre protection tubes 15 and the multi-fibre optical cable protection tube 16 so as to reinforce them. In this case, the fibrous anti-tensile bodies 23 are led into the space between the protection tube 17 and the external protection tube 19, and the inside of the external protection tube 19 is filled with resin so that the fibrous anti-tensile bodies 23 are fixed therein. As a result, a branch portion durable to tensile force is obtained.

Fig. 6 is a longitudinal sectional view showing a third embodiment of the multi-fibre optical cable branch device of the present invention.

In this specific example, similarly to the specific example of Fig. 5, the single optical fibre protection tubes 15 and the multi-fibre optical cable protection tube 16 are reinforced by the fibrous anti-tensile bodies 23 and the external coatings 21 and 22. In this case, the fibrous anti-tensile bodies 23 are led onto the protection tube 17, and then a layer of a heat-shrinkable tube 24 or a heat-shrinkable tube 24 having a heat-fusible adhesive 25 in the inside thereof is provided over the protection tube 17 so as to fix the fibrous anti-tensile bodies 23 on the protection tube 17. As a result, similarly to the embodiment of Fig. 5, a branch portion durable to tensile force is obtained. Further, it is not necessary to wait until the resin is hardened because no resin is poured into the inside, unlike the embodiment of Fig. 5. Accordingly, the working time is shortened.

As described above, in the multi-fibre optical cable branch device of the present invention, the branch portion protector constituted by the spindle-shaped protector and the perforated member which are integrally formed with each other is provided between the end portion of the multi-fibre optical cable and the single optical fibre protection tubes so that no excessive force is exerted on the branching-out single optical fibres and the optical loss is stable. Therefore, the multi-fibre optical cable branch device of the present invention is exceedingly effective when it is used as a branch device for a fibre optical tape or the like which is introduced into a fibre optical cable to reduce the diameter thereof.

## Claims

1. An optical fibre cable branch device comprising: a multi-fibre optical cable (1), a plurality of single optical fibres (2) branching out from said multi-fibre optical cable (1), a plurality of single optical fibre protection tubes (15), and a branch portion protector (10) arranged between an end portion of said multi-fibre optical cable (1) and said single optical fibre protection tubes (15), said branch portion protector including a perforated member (12) having a plurality of insertion holes (13, 14) formed at the same circumference, and a substantially spindle-shaped protector (11) formed integrally with said perforated member and disposed coaxially with said perforated member, said single optical fibres branching out from said multi-fibre optical cable passing over said spindle-shaped protector along an outer surface thereof and through said insertion holes (13, 14) of the perforated member (12) and thence through the single optical fibre protection tubes (15) respectively, a branch portion protection tube (17) being disposed around the end portion of the multi-fibre optical cable (1) and the branch portion protector (10), characterised in that the section of the branch portion protection tube (17) around the end portion of the multi-fibre optical cable (1) and the spindle-shaped protector (11) is filled with resin (20), and in that the branch portion protection tube (17) is fitted around the spindle-shaped protector (11) in such a manner as to prevent the resin (20) extending into the respective end portions of the single optical fibre protection tubes (15) adjacent to the branch portion protector (10).

2. A branch device as claimed in Claim 1, wherein a plurality of longitudinal grooves (11a) are formed on the outer surface of said spindle-shaped protector (11) to accommodate said single optical fibres (2) respectively.

3. A branch device as claimed in Claim 1 or Claim 2, wherein said resin (20) filling said branch portion protection tube is selected from a group comprising formal resin, UV-setting resin, one-component resin and two-component resin.

4. A branch device as claimed in any one of Claims 1 to 3, wherein said branch portion protection tube (17) is a heat-shrinkable tube and the filling resin (20) is heat-fusible.

5. A branch device as claimed in any one of Claims 1 to 3, wherein said single optical fibre protection tubes (15) and a multi-fibre optical cable protection tube (16) are reinforced with fibrous anti-tensile bodies (23) and external coatings (21, 22), said fibrous anti-tensile bodies extend into a portion between the branch portion protection tube (17) and an external protection tube (19) and said portion is filled with resin (20) so that said fibrous anti-tensile bodies are fixed therein.

6. A branch device as claimed in any one of Claims 1 to 3, further comprising a heat-shrinkable tube (24) provided outside of fibrous anti-tensile bodies (23) and external coatings tubes (21, 22), and said fibrous anti-tensile bodies extend between said heat-shrinkable tube and said branch portion protection tube (17) so as to be fixed on said branch portion protection tube.

7. A branch device as claimed in Claim 6, wherein said heat-shrinkable tube (24) has a heat-fusible adhesive (25) provided in the inside thereof.

## Patentansprüche

1. Verzweigungsbaustein für Lichtwellenleiterkabel, der folgende Elemente aufweist: ein Mehrfaserlichtleiterkabel (1), eine Vielzahl von Einzellichtwellenleitern (2), die aus dem Mehrfaserlichtleiterkabel (1) abzweigen, eine Vielzahl von Einzellichtwellenleiter-Schutzrohren (15) und eine Schutzeinrichtung für den Verzweigungsbereich (10), die zwischen einem Endabschnitt des Mehrfaserlichtleiterkabels (1) und den Einzellichtwellenleiter-Schutzrohren (15) angeordnet ist, wobei die Schutzeinrichtung für den Verzweigungsbereich (10) ein perforiertes Element (12) einschließt, das eine Vielzahl von Einführungslöchern (13, 14), die auf dem gleichen Umfang gebildet werden, und eine im wesentlichen spindelförmige Schutzeinrichtung (11) hat, die mit dem perforierten Element als Ganzes gebildet wird und koaxial mit dem perforierten Element angeordnet ist, wobei die Einzellichtwellenleiter, die von dem Mehrfaserlichtleiterkabel abzweigen, längs einer Außenfläche der spindelförmigen Schutzeinrichtung über diese und durch die Einführungslöcher (13, 14) des perforierten Elementes (12) und dann jeweils durch die Einzellichtwellenleiter-Schutzrohre (15) geführt werden, wobei ein Schutzrohr für den Verzweigungsbereich (10) um den Endabschnitt des Mehrfaserlichtleiterkabels (1) und die Schutzeinrichtung für den Verzweigungsbereich (10) angeordnet wird, dadurch gekennzeichnet, daß der Abschnitt des Schutzrohres für den Verzweigungsbereich (10) um den Endabschnitt des Mehrfaserlichtleiterkabels (1) und die spindelförmige Schutzeinrichtung (11) mit Harz gefüllt wird und daß das Schutzrohr für den Verzweigungsbereich (17) so um die spindelförmige Schutzeinrichtung (11) angepaßt wird, daß eine Ausbreitung des Harzes (20) in die entsprechenden Endabschnitte der Einzellichtwellenleiter-Schutzrohre (15) an der Schutzeinrichtung für den Verzweigungsbereich (10) verhindert wird.

2. Verzweigungsbaustein nach Anspruch 1, bei dem auf der Außenfläche der spindelförmigen Schutzeinrichtung (11) eine Vielzahl von Längsrillen (11a) gebildet wird, um jeweils die Einzellichtwellenleiter (2) aufzunehmen.

3. Verzweigungsbaustein nach Anspruch 1 oder Anspruch 2, bei dem das Harz (20), welches das Schutzrohr für den Verzweigungsbereich füllt, aus einer Gruppe ausgewählt wird, die Formalharz, UV-aushärtendes Harz, Einkomponentenharz und Zweikomponentenharz umfaßt.

4. Verzweigungsbaustein nach einem der Ansprüche 1 bis 3, bei dem das Schutzrohr für den Verzweigungsbereich (17) ein wärmeschrumpfendes Rohr ist und das Füllharz (20) wärmeschmelzbar ist.

5. Verzweigungsbaustein nach einem der Ansprüche 1 bis 3, bei dem die Einzellichtwellenleiter-Schutzrohre (15) und ein Mehrfaserlichtleiterkabel Schutzrohr (16) mit fibrösen, einer Streckung entgegenwirkenden Körpern (23) und äußeren Überzügen (21, 22) verstärkt werden, wobei sich die fibrösen, einer Streckung entgegenwirkenden Körper in einen Bereich zwischen dem Schutzrohr für den Verzweigungsbereich (17) und einem äußeren Schutzrohr (19) erstrecken und dieser Bereich mit Harz (20) gefüllt ist, so daß die fibrösen, einer Streckung entgegenwirkenden Körper darin fixiert sind.

6. Verzweigungsbaustein nach einem der Ansprüche 1 bis 3, der außerdem ein wärmeschrumpfendes Rohr (24) aufweist, das außerhalb der fibrösen, einer Streckung entgegenwirkenden Körper (23) und der äußeren Überzugsrohre (21, 22) vorhanden ist, und wobei sich die fibrösen, einer Streckung entgegenwirkenden Körper zwischen diesem wärmeschrumpfenden Rohr und dem Schutzrohr für den Verzweigungsbereich (17) befinden, so daß sie auf dem Schutzrohr für den Verzweigungsbereich fixiert sind.

7. Verzweigungsbaustein nach Anspruch 6, bei dem das wärmeschrumpfende Rohr (24) im Inneren einen wärmeschmelzbaren Klebstoff (25) aufweist.

## Revendications

1. Dispositif de dérivation de câble à fibres optiques, comprenant un câble optique (1) à plusieurs fibres, plusieurs fibres optiques séparées (2) partant en dérivation du câble optique (1), plusieurs tubes (15) de protection des fibres optiques séparées, et un protecteur (10) de partie de dérivation placé entre une partie d'extrémité du câble optique (1) et les tubes (15) de protection des fibres optiques séparées, le protecteur de la partie de dérivation comprenant un organe perforé (12) ayant plusieurs trous d'insertion (13, 14) formés sur une même circonférence, et un protecteur (11) en forme de broche pratiquement qui est solidaire de l'organe perforé et qui est placé coaxialement à l'organe perforé, les fibres optiques séparées partant en dérivation du câble optique et passant sur le protecteur en forme de broche le long de sa surface externe et dans les trous d'insertion (13, 14) de l'organe perforé (12) puis dans les tubes (15) de protection des fibres optiques séparées, un tube (17) de protection de la partie de dérivation étant placé autour de la partie d'extrémité du câble optique (1) et du protecteur (10) de la partie de dérivation, caractérisé en ce que le tronçon du tube (17) de protection de partie de dérivation placé autour de la partie d'extrémité du câble optique (1) et du protecteur (11) en forme de broche est rempli d'une résine (20), et en ce que le tube (17) de protection de la partie de dérivation est placé autour du protecteur (11) en forme de broche d'une manière telle que la résine (20) ne peut pas pénétrer dans les parties respectives d'extrémité des tubes (15) de protection des fibres otiques séparées près du protecteur (10) de la partie de dérivation.

2. Dispositif de dérivation selon la revendication 1, dans lequel plusieurs gorges longitudinales (11a) sont formées à la surface externe du protecteur (11) en forme de broche pour le logement des fibres optiques séparées (2) respectivement.

3. Dispositif de dérivation selon la revendication 1 ou 2, dans lequel la résine (20) qui remplit le tube de protection de la partie de dérivation est choisie dans le groupe qui comprend une résine de formal, une résine durcissant sous l'action des ultraviolets, une résine à un composant et une résine à deux composants.

4. Dispositif de dérivation selon l'une quelconque des revendications 1 à 3, dans lequel le tube (17) de protection de la partie de dérivation est un tube thermorétractable et la résine de remplissage (20) est thermofusible.

5. Dispositif de dérivation selon l'une quelconque des revendications 1 à 3, dans lequel les tubes (15) de protection des fibres optiques séparées et un tube (16) de protection du câble optique sont renforcés par des corps fibreux (23) résistant à la traction et des revêtements externes (21, 22), les corps fibreux résistant à la traction étant disposés dans une partie comprise entre le tube (17) de protection de la partie de dérivation et un tube (19) de protection externe, et ladite partie est remplie d'une résine (20) de manière que les corps fibreux résistant à la traction soient fixés à l'intérieur.

6. Dispositif de dérivation selon l'une quelconque des revendications 1 à 3, comprenant en outre un tube thermorétractable (24) placé à l'extérieur des corps fibreux (23) résistant à la traction et des revêtements externes (21, 22), et les corps fibreux résistant à la traction sont disposés entre le tube thermorétractable et le tube (17) de protection de la partie de dérivation afin qu'ils soient fixés sur le tube de protection de la partie de dérivation.

7. Dispositif de dérivation selon la revendication 6, dans lequel le tube thermorétractable (24) a un adhésif thermofusible (25) placé à l'intérieur.
